# EUROPEAN PATENT APPLICATION

(11) **EP 1 052 864 A1**
(43) Date of publication of application: **15.11.2000**
(21) Application number: 99109449.1
(22) Date of filing: 11.05.1999
(51) Int. Cl.: H04Q 7/32, H04Q 7/38

(54) **Mobile terminal having a protection mode**

(71) Applicant: Sony International (Europe) GmbH, 50829 Köln (DE)
(72) Inventor: Kieschke, Arnd Steffen, 85609 Aschheim (DE); Winkler, Gregor, 85609 Aschheim (DE)
(74) Representative: Körber, Martin, Dipl.-Phys.

(57) **Abstract**

The present invention relates to a mobile terminal (200, 300) for a wireless cellular telecommunication system. The mobile terminal (200, 300) is adapted to receive mode change information for protecting a predetermined area, e. g. airplanes, hospitals, restaurants, or the like from disturbing use of the mobile terminal. The mobile terminal (200, 300) comprises control means (204, 321) for changing a mode of the mobile terminal (200, 300) into a protection mode depending on detected mode change information, whereby the control means, after detection of a mode change information and before changing the mode of the mobile terminal, causes an indicating means (212, 323), to output a warning signal for warning a user that the mobile terminal will be put in said protection mode after a predetermined time period has elapsed, and extending means (214, 331) for extending the predetermined time period by an extension time period in response to an activation of an activating means (213, 330) by a user. In said protection mode, the mobile terminal (200, 300) is e. g. put in a silent mode, in which audible signals output from the mobile terminal are suppressed, or in a mode, in which at least the high frequency portion of the mobile terminal is switched off so that interference with other electronic systems within the predetermined area to be protected is avoided. The present invention further relates to a method for controlling such mobile terminals. The present invention enables a user entering a predetermined area to be protected to leave this area again to maintain a conversation or to finish the transmission or reception of written or graphical data, so that no data are lost and the user-friendliness of the mobile terminal is significantly enhanced.

## Description

The present invention relates to a mobile terminal for a wireless cellular telecommunication system, which has a protection mode for protecting a predetermined area from disturbing usage of the mobile terminal and a method for controlling such a mobile terminal.

In many areas the use of mobile terminals of wireless telecommunication systems is regarded as a nuisance for other people, like in restaurants or in the opera, or is even dangerous in places like hospitals, airplanes or nuclear power plants. In places like restaurants or in the opera, audible signals output from mobile terminals are disturbing other people or the spectacle being given. In the second case, the use of the mobile terminals, particularly the transmission of high frequency electromagnetic waves can disturb other electronic devices or the like by interfering with their circuitry possibly leading to severe incidents. It is therefore important to provide a way to protect predetermined areas from a disturbing usage of mobile terminals within these areas. Particularly, the protection of such predetermined areas should not depend on the user's will, e. g. on a user's input of information to the mobile terminal, but the mobile terminals should be put in a protection mode automatically.

EP 0 891 110 A1 discloses a method and a system for preventing a mobile terminal from causing disturbance within a predetermined area, e. g. inside a plane or inside of hospitals. Particularly, the disclosed method comprises the steps of transmitting a deactivation or protection signal from a base station to a mobile terminal and deactivating a use of the output of the mobile terminal in response to the deactivation signal. Thereby, the transmission output is deactivated. The base station can either be an ordinary base station or a base station specifically designed for mainly transmitting the deactivation signal. Upon approaching or entering a predetermined area to be protected, the mobile terminal receives a deactivation signal from the corresponding base station of the predetermined area and is automatically deactivated, i. e. is switched into a mode in which the use of the transmission output is deactivated. Thereby, the mobile terminal can output a warning signal which indicates a user that the mobile terminal will be deactivated soon.

The system disclosed in EP 0 891 110 A1 has the disadvantage that a mobile terminal having received a deactivation signal from a base station of a predetermined area to be protected will be deactivated automatically after a predetermined time period. A user having a conversation on the mobile terminal in which he receives important information does not have any possibility to hinder the automatic deactivation of his mobile terminal after such a deactivation or protection signal has been received.

The object of the present invention is therefore to provide a mobile terminal for a wireless cellular telecommunication system, which has a protection mode in which the mobile terminal is put after receiving a protection signal from a base station of a predetermined area to be protected from disturbing usage of the mobile terminal, which gives a user the possibility of hindering the automatic switching off the mobile terminal into a protection mode after a predetermined time period after a protection signal has been received, so that he can finish his telephone conversation or leave the protected area to be able to continue the conversation. The object of the present invention is further to provide a method for controlling such a mobile terminal.

The above object is achieved by a mobile terminal for a wireless cellular telecommunication system according to claim 1, which comprises transmitting and receiving means for transmitting information to and receiving information from base stations of said telecommunication system and for receiving mode change information transmitted from a base station on the basis of said wireless telecommunication system for protecting a predetermined area from disturbing use of the mobile terminal, control means for detecting received mode change information and changing a mode of the mobile terminal into a protection mode depending on the received mode change information, whereby said control means, after a detection of a mode change information and before changing the mode of the mobile terminal, causes an indicating means to output a warning signal for warning a user that the mobile terminal will be put in said protection mode after a predetermined time period has elapsed, and means for extending said predetermined time period by an extension time period in response to an activation of an activating means by a user. This first type of a mobile terminal according to the present invention is therefore adapted to receive the protection signals on the basis of the same wireless telecommunication system, in which it is operated to transmit and receive user data and control data. Since this first type of a mobile terminal according to the present invention is adapted to receive the protection signals on the basis of the same wireless telecommunication system, no additional hardware components in addition to the hardware components necessary for a normal operation of the mobile terminal have to be provided, which lowers the costs, the size and the power consumption of the mobile terminal significantly. Furthermore, the possibility is provided to detect old mobile terminals which do not support this protected mode and are not adapted to receive the protection signals. By detecting these old mobile terminals, other possibilities of deactivating them are possible, e. g. by notification of security personal, SMS messages or the like.

The above object is further achieved by a mobile terminal for a wireless telecommunication system according to claim 2, comprising transmitting and receiving means for transmitting information to and receiving information from base stations of said telecommunication system, detecting means for detecting mode change information transmitted from a base station of a wireless protection system for protecting a predetermined area from disturbing use of the mobile terminal, said wireless protection system being different from said wireless telecommunication system, control means for changing a mode of the mobile terminal into a protection mode depending on detected mode change information, whereby said control means, after detection of a mode change information and before changing the mode of the mobile terminal, causes an indicating means to output a warning signal for warning a user that the mobile terminal will be put in said protection mode after a predetermined time period has elapsed, and extending means for extending said predetermined time period by an extension time period in response to an activation of an activating means by an user. The second type of a mobile terminal according to the present invention is adapted to receive said mode change information on the basis of a wireless protection system different from the wireless telecommunication system, in which the mobile terminal usually transmits and receives user and control data. Separating the function of detecting protection signals from performing functions for the wireless telecommunication system allows to completely disable function blocks for the wireless telecommunication system in the protection mode, thereby eliminating any associated power consumption and undesirable or dangerous interference to other services or devices in the area to be protected.

The above object is further achieved by a method for controlling a mobile terminal for a wireless cellular telecommunication system according to claim 9, comprising transmitting and receiving means for transmitting information to and receiving information from base stations of the telecommunication system and for receiving mode change information transmitted from a base station on the basis of said wireless telecommunication system for protecting a predetermined area from disturbing use of the mobile terminal, the method according to the present invention comprising the steps of detecting received mode change information and changing a mode of the mobile terminal into a protection mode depending on the received mode change information, whereby after detection of a mode change information and before changing the mode of the mobile terminal a warning signal is output for warning a user that the mobile terminal will be put in said protection mode after a predetermined time period has elapsed, and extending said predetermined time period by an extension time period in response to an activation of an activating means by a user.

The above object is further achieved by a method for controlling a mobile terminal for a wireless cellular telecommunication system according to claim 10, comprising transmitting and receiving means for transmitting information to and receiving information from base stations of said telecommunication system, and detecting means for detecting mode change information transmitted from a base station of a wireless protection system for protecting a predetermined area from disturbing use of the mobile terminal, said wireless protection system being different from said wireless telecommunication system, the method according to the present invention comprising the steps of changing a mode of the mobile terminal into a protection mode depending on detected mode change information, whereby after detection of a mode change information and before changing the mode of the mobile terminal a warning signal is output for warning a user that the mobile terminal will be put in said protection mode after a predetermined time period has elapsed, and extending said predetermined time period by an extension time period in response to an activation of an activating means by a user.

The present invention therefore proposes a very user-friendly mobile terminal. Although the mobile terminal is automatically switched into a protection mode upon approaching or entering a predetermined area to be protected from disturbing usage of the mobile terminal, the user has a possibility to extend the time period until the mobile terminal is switched into the protection mode. This enables a user to finish the operation he is currently performing on or with his mobile terminal upon entering or approaching a predetermined area.

Advantageously, the indicating means output a warning signal only when the mobile terminal is in a communicating mode. The communicating mode is e. g. a conversation mode, in which a user is having a speech data conversation or a mode in which a user is transmitting and/or receiving written or graphical data by means of his mobile terminal. This feature is particularly user-friendly since the mobile terminal is switched into the protection mode automatically after receiving a mode change information in all other operation modes except a communicating mode so that a warning signal is output only in cases in which it is necessary to avoid the loss of transmitted or received data.

The warning signal can be an acoustic signal, a visual signal and/or a vibration signal. Advantageously, a warning signal output means is provided, which incorporates the above-mentioned three possibilities of outputting a warning signal and further possible options, whereby the user may choose one or more of the different types of warning signals to be output. Since the type of the warning signal output upon receiving a mode change information can be set depending on the particular wishes of a user, it can be assured that the user will take notice of an output warning signal in any case.

Advantageously, the activating means to be activated by a user for extending the predetermined time period until the mobile terminal is switched into said protection mode is an input key. Thereby, the input key can be a special key only provided for this particular function or can be a soft key having different functions depending on the respective operating mode of the mobile terminal. Alternatively, the activation means can be part of the microphone of the mobile terminal. In this case, the activating means can e. g. be a means for detecting particular predefined acoustic signals, e. g. speech signals spoken by a user or sound signals output from a particular apparatus which is activated by the user for this purpose.

Advantageously, the extending means extends the predetermined time period by the extension time period only once. Thereby it is avoided that a user continues to extend the predetermined time period while entering the predetermined area to be protected, which is particularly important for protection of sensitive environments like power plants, hospitals or the like.

Alternatively, the extending means may extend the predetermined time period only two times or three times which is acceptable in less sensitive environments like restaurants or the like. In any case it has to be assured that the use of the mobile terminal does not severely disturb the predetermined area. Alternatively, in other predetermined areas an extension of the predetermined time period might not be allowed at all, which is correspondingly controlled by the respective protection signal transmitter of the predetermined area. A protection signal transmitter in such a predetermined area e. g. provides and transmits a protection signal comprising an indication for the receiving mobile terminals that an extension of the predetermined time period is not allowed. Further, the information on the extended time period and number of allowable extensions within a certain predetermined area could be transmitted from the respective protection signal transmitter to the mobile terminal. Thus, different predetermined areas might have different levels of protection from disturbing usage of mobile terminals. In certain predetermined areas, two or three extensions of the predetermined time period might be possible, whereas in other predetermined areas, only one extension of the predetermined time period is possible, and in high security predetermined areas, no extension at all might be possible. The respective information could be transmitted from the respective protection signal transmitter to the mobile terminals. Further, the protection level of a predetermined area can be changed dynamically. If, e. g., the predetermined area is a plane, a protection signal transmitter within a plane could dynamically change the protection level depending on the situation. Further, the possible extension time could be informed to the user and his communication partner visually and/or optically, so that they know how much time remains until the mobile terminal within that predetermined area is switched off automatically.

The present invention is explained in more detail in the following description by means of preferred embodiments thereof relating to the enclosed drawings, in which
figure 1 shows a typical application scenario of the present invention,
figure 2 shows another application scenario of the present invention,
figure 3 shows a first type of a mobile terminal according to the present invention, and
figure 4 shows a second type of a mobile terminal according to the present invention.

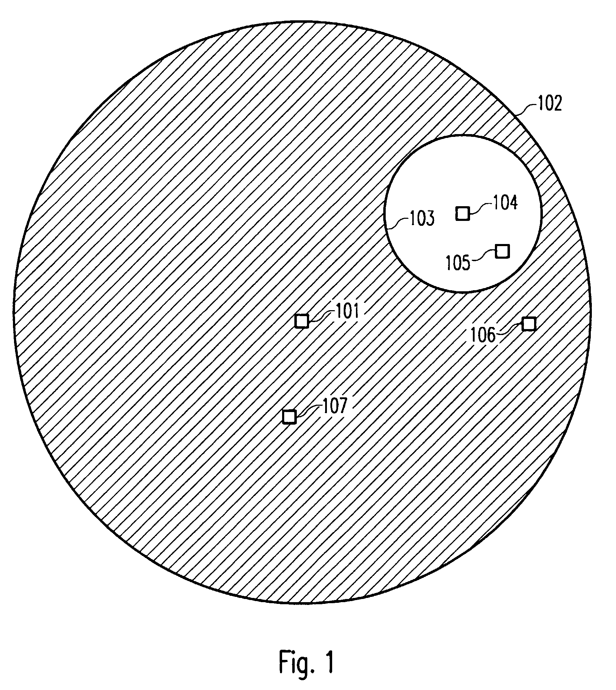

Figure 1 shows a base station 101 of a normal wireless cellular telecommunication system having a transmitting and receiving range indicated by the circle 102. The circle 102 thus indicates the cell size which is served by the base station 101. The base station 101 transmits and receives signals to and from mobile terminals 106, 107 within the range limited by the circle 102. The mobile terminals 106 and 107 located within the range 102 are able to communicate with the base station 101 on the basis of the wireless telecommunication system, e. g. the GSM-system or any other wireless cellular telecommunication system.

Within the range of the base station 101 a protection area is located, the range of which is indicated by the circle 103. This protection area 103 is e. g. the area of a hospital, a nuclear power plant, a restaurant or the like. The protection area is protected from disturbing use of mobile terminals within its range by means of a protection signal transmitter 104, which transmits mode change information to mobile terminals within a predetermined area as e. g. the protection area of the range 103 shown in figure 1. Mobile terminals within the predetermined area receive the mode change signals from the protection signal transmitter 104 and change their modes accordingly into a protection mode so that the predetermined area is protected from disturbing use of the mobile terminals. The mobile terminal 105 located within the range 103 of the protection signal transmitter 104 is a mobile terminal according to the present invention and is therefore able to receive the protection signals from the protection signal transmitter 104. Upon detecting such a protection signal from the protection signal transmitter 104, the mobile terminal 105 switches into a protection mode so that the protection area 103 is protected from disturbing usage of the mobile terminal 105. Thereby, the mode change information transmitted from the protection signal transmitter 104 and the protection mode of the mobile terminal 105 depend on the area to be protected. In case of restaurants, operas or the like, in which audible signals output from mobile terminals are disturbing other people or the show, the predetermined area has to be protected from disturbing usage of the mobile terminals by lowering or suppressing audible signals from the mobile terminals. In other cases like hospitals, nuclear power plants or the like, in which the electromagnetic signals output from the mobile terminals can severely disturb other electronic devices within the predetermined area, at least the high frequency part of the mobile terminals has to be switched off to protect the predetermined area from disturbing usage of the mobile terminals.

A mobile terminal entering the range 103 of the predetermined area from the outside, e. g. assuming that the mobile terminal 106 shown in figure 1 approaches the circle 103, it receives mode change information transmitted from the protection signal transmitter 104. After reception of the mode change signals, the mobile terminal is then switched into the protection mode after a predetermined time, which can be preset or which can be determined by the processing time necessary to switch the mobile terminal into the protection mode. Therefore, the mobile terminal is automatically switched into the protection mode. According to the present invention, a mobile terminal receiving mode change signals from the protection signal transmitter 104 outputs a warning signal for warning a user that the mobile terminal will be switched into the protection mode after a predetermined time period has elapsed. A user is then able to extend the predetermined time period by an extension time period by activating an activating means on the mobile terminal.

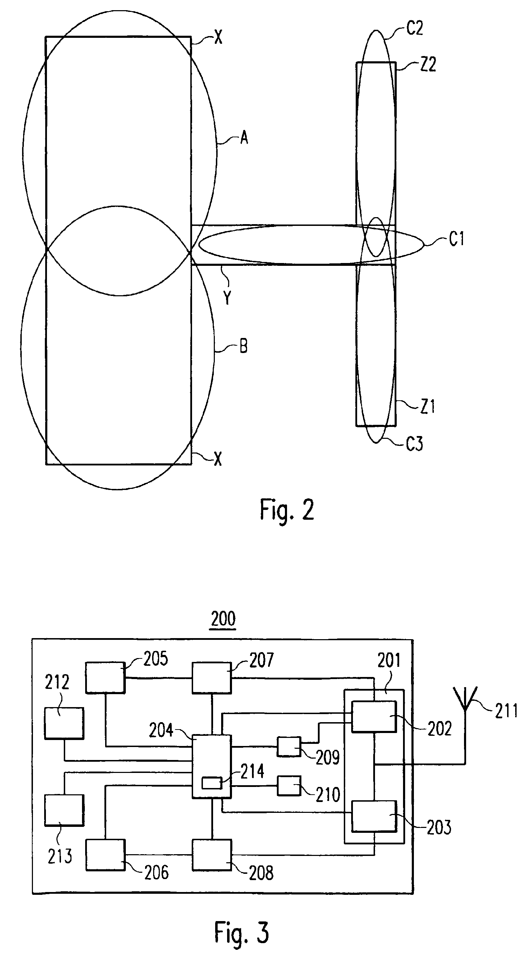

In figure 2, another application scenario of the present invention is shown. Figure 2 shows e. g. the topography of an airport terminal, whereby the areas A and B are the coverage areas of a base station of a normal cellular wireless telecommunication system covering the entire waiting lounge X. Areas C1, C2 and C3 indicate the coverage areas of a protection signal transmitter transmitting mode change signals to protect the areas C1, C2 and C3 from disturbing usage of mobile terminals. In the case shown in figure 2, the areas C1, C2 and C3 cover e. g. the gangways Y, Z1 and Z2, respectively towards an airplane. As long as the user is making phone calls while being in the waiting lounge X, he is within the cell site of a normal base station and his phone will work normally. Once he is approaching the area C1, the mobile terminal receives mode change information from the protection signal transmitter. The mobile terminal according to the present invention will then output a warning signal indicating a user that his mobile terminal will be switched automatically into the protection mode after a predetermined time period. Thus, e. g. in the case that the user is in a telephone conversation on his mobile terminal in the waiting lounge X and he has to board the airplane without wanting to interrupt his conversation, he may approach or enter the area C1 maintaining his conversation. The mobile terminal, upon receiving the mode change information from the respective protection signal transmitter protecting the gangway Y, will output a warning signal indicating to the user that his mobile terminal will be switched into the protection mode soon. The user may then activate an activation means on his mobile terminal to extend the time period until the mobile terminal is put into the protection mode. The predetermined areas, e. g. the areas C1, C2 and C3, could have different levels of protection. A user entering the gangway Y and being in a conversation on his mobile terminal, e. g., may be allowed to extend the time period once or twice until the mobile terminal is put into the protection mode. However, if the user approaches, e. g., the gangways Z1 or Z2, which have a higher protection level, the mobile terminal will be switched off immediately and an extension of the predetermined time period is not possible.

It is to be noted, that the protection signal transmitters for the scenarios as shown in figure 1 and figure 2, as e. g. the protection signal transmitter 104, are either transmitting the mode change information on the basis of the same wireless telecommunication system, in which the respective mobile terminals normally operate, or on the basis of a wireless protection system different from the normal wireless telecommunication system.

In figure 3, a first type of a mobile terminal according to the present invention is shown. The mobile terminal 200 of figure 3 is adapted to receive mode change information on the basis of the normal wireless cellular telecommunication system, on the basis of which it normally communicates with a respective normal base station of the telecommunication system.

The mobile terminal 200 comprises transmitting and receiving means 201 for transmitting information to and receiving information from normal base stations of the telecommunication system. The transmitting and receiving means 201 is further adapted to receive mode change information transmitted from a protection signal transmitter on the basis of the same wireless telecommunication system. In this case, the protection signal transmitter may either be an apparatus simply transmitting the mode change information without having other functionalities, or a normal base station of the wireless cellular telecommunication system additionally transmitting the mode change information. The transmitting and receiving means 201 of the mobile terminal 200 further comprises a transmitting unit 202 and a receiving unit 203. The receiving unit 203 of the transmitting and receiving means 201 receives signal by means of an antenna 211. The received signals are then processed in the mobile terminal 200 under control of a control means 204. Thereby, the received signals are e. g. decoded in a decoding means 208, whereby further processing steps depending on the structure of the signals might be conducted. At the end of the processing, the signals are transformed into audible signals to be output from a loudspeaker 206 in case they are voice signals, or answered by the mobile terminal 200 in case they are signalling information, or passed on to the data part or a data device in case they are data signals, or output on a display in case they are graphic information or written information.

The mobile terminal 200 further comprises a microphone 205 for receiving and detecting acoustic signals, e. g. speech signals from a user. The acoustic signals detected from the microphone 205 are processed under the control of the control means 204, e. g. are coded in a coding means 207 and so on depending on the structure of the signals and then transmitted by the transmitting unit 202 through the antenna 211. The mobile terminal 200 comprises further elements for processing received signals and signals to be transmitted besides the decoding means and the coding means, whereby the additional elements depend on the structure of the signals in the wireless telecommunication system, so that a large variety of further processing units can be implemented depending on the application.

The mobile terminal 200 further comprises a generating means 209 connected between the control means 11 and the transmitting unit 201, e. g. for generating signalling information, and a timing means 210 connected with the control means 204 for providing time information to the control means. Further, the mobile terminal 200 comprises an indicating means 212 for outputting a warning signal for warning a user that the mobile terminal will be put in the protection mode after a predetermined time period, e. g. given by the timing means 210, has elapsed after a mode change information signal had been received by the receiving means 203 and detected by the control means 204. The indicating means 212 can be a loudspeaker for outputting audible warning signals, a display for outputting visible warning signals, a vibration means for outputting vibrating warning signals or the like. In case of audible or visible warning signals, the indicating means 212 can be part of or be identical to the normal loudspeaker and display, respectively, of the mobile terminal 200. Further, the mobile terminal 200 comprises an activating means 213 which can be activated by a user in response to a warning signal output by the indicating means 212. The control means 204 comprises an extending means 214 which, upon detection of an activation signal output from the activating means 213 upon activation by a user, extends the predetermined time period until the mobile terminal 200 is switched into said protection mode by an extension time period calculated by the timing means 210. Upon expiring the extension time period, the control means 204 automatically switches the mobile terminal 200 into said protection mode. Deactivating means 213 can be a separate key provided only for this purpose or can be part of the normal key pad of the mobile terminal 200.

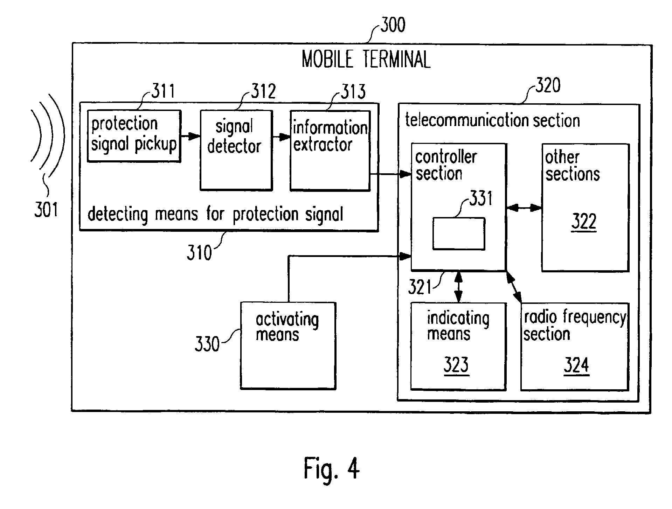

In figure 4, a second type of a mobile terminal according to the present invention is shown, in which the mode change information is information transmitted on the basis of a wireless protection system different from the wireless cellular telecommunication system in which a mobile terminal usually operates. In this case, the protection signal transmitter, as e. g. the protection signal transmitter 104 shown in figure 1, operates to transmit the mode change information only on the basis of the wireless protection system. The mobile terminal 300 shown in figure 4 comprises a detecting section 310 for detecting mode change signals, as e. g. transmitted from a protection signal transmitter 104 shown in figure 1, and changing the mode of the mobile terminal 300 into a protection mode. Further, the mobile terminal 300 comprises a telecommunication section 320 for communicating with normal base stations of the wireless cellular telecommunication system being different from the wireless protection system.

The detecting means 310 of the mobile terminal 300 comprises a pick-up means 311 for picking up mode change signals 301, and supplies the picked up mode change signal to a detecting means 312 for detecting and demodulating the picked up mode change signals. The demodulated mode change signals are then supplied to an information extracting means 313, which recognizes relevant mode change signals for the mobile terminal 300, and supplies the extracted mode change information to a controlling section 321 of the telecommunication section 320. The controlling section 321 controls the changement of the mode of the mobile terminal 300 into the protection mode. Thereby, the controlling section 321 controls an indicating means 323 to output a warning signal for warning a user that the mobile terminal 300 will be put in the protection mode after a mode change signal had been received and after a predetermined time period has elapsed. The mobile terminal 300 further comprises an activating means 330 which can be activated by a user in response to a warning signal output from the indicating means 323. Upon activation by a user, the activating means 330 outputs an activation signal to an extending means 331 comprised in the controller section 321, which extends the predetermined time period until the mobile terminal 300 is switched into the protection mode by an extension time period. After the extension time period has elapsed, the mobile terminal 300 is automatically switched into the protection mode. The activating means 130 can be a separate key only for the activating function according to the present invention, a soft key comprised in the normal key pad of the mobile terminal 300 or a voice activated control means. The indicating means 323 can be a display for displaying visual warning signals, a loudspeaker for outputting audible warning signals, a vibration means for outputting vibrating warning signals or the like.

Further, the mobile terminal 300 comprises a radio frequency section 324 for transmitting and receiving radio frequency signals in the wireless cellular telecommunication system. Further, other sections 322 for operating the mobile terminal 300 in the wireless telecommunication system, i. e. for communicating data with normal base stations of the telecommunication system within non-protected areas are provided.

The mobile terminal 200 of figure 3 as well as the mobile terminal 300 of figure 4 can have different levels of the protection mode. The protection mode can e. g. be a silent mode, in which only audible signals output from the mobile terminals 200 and 300 are lowered or suppressed. Further, the protection mode can be a mode in which only a radio frequency section is switched off to avoid transmission and reception of radio frequency signals in the wireless telecommunication system, whereby other base band functions remain in an operation mode. Further, the protection mode can be a mode in which the entire mobile terminal is switched off. The protection mode into which the mobile terminals 200 and 300 are switched depends therefore on the area to be protected, in places like restaurants, operas, theaters or the like, the silent protection mode is sufficient. In other areas, like nuclear power plants and airplanes, at least the radio frequency section has to be switched off in the protection mode. Further, the mobile terminal 200 as well as the mobile terminal 300 can be adapted to output the warning signal upon reception of a mode change information only when the mobile terminal 200 or 300 is a communication mode, i. e. a user has a telephone conversation or is sending or receiving written or graphic data. Further, the extending means 204 of the mobile terminal 200 as well as the extending means 331 of the mobile terminal 300 can be adapted to extend the predetermined time period until the mobile terminal 200 or 300 is switched into the protection mode by said extension time period only once. Alternatively, the extending means 214 or 331 can be adapted to extend the predetermined time period two or three times consecutively upon respective activation of the activating means 213 or 330. The number of times, by which the predetermined time period can be extended, may depend on the predetermined area to be protected. In cases like nuclear power plants, airplanes or the like, it is advisable to extend the predetermined time period until the mobile terminal 200 or 300 is switched into the protection mode by said extension time period only once, since the protection of the predetermined area from disturbing usage of the mobile terminals 200, 300 has top priority. In other cases like restaurants, operas or the like, the protection of the predetermined area is less mandatory, so that the predetermined time period can be extended two or more times.

## Claims

1. Mobile terminal (200) for a wireless cellular telecommunication system, with transmitting and receiving means (201) for transmitting information to and receiving information from base stations of said telecommunication system and for receiving mode change information transmit from a base station on the basis of said wireless telecommunication system for protecting a predetermined area from disturbing use of the mobile terminal,
control means (204) for detecting received mode change information and changing a mode of the mobile terminal into a protection mode depending on the received mode change information, whereby said control means (204), after detection of a mode change information and before changing the mode of the mobile terminal, causes an indicating means (212) to output a warning signal for warning a user that the mobile terminal (200) will be put in said protection mode after a predetermined time period has elapsed, and
means (214) for extending said predetermined time period by an extension time period in response to an activation of an activating means (213) by a user.

2. Mobile terminal (300) for a wireless cellular telecommunication system, with transmitting and receiving means (320) for transmitting information to and receiving information from base stations of said telecommunication system,
detecting means (310) for detecting mode change information transmit from a base station of a wireless protection system for protecting a predetermined area from disturbing use of the mobile terminal, said wireless protection system being different from said wireless telecommunication system,
control means (321) for changing a mode of the mobile terminal into a protection mode depending on detected mode change information,
whereby said control means (321), after detection of a mode change information and before changing the mode of the mobile terminal, causes an indicating means (323) to output a warning signal for warning a user that the mobile terminal will be put in said protection mode after a predetermined time period has elapsed, and
extending means (331) for extending said predetermined time period by an extension time period in response to an activation of an activating means (330) by a user.

3. Mobile terminal according to claim 1 or 2,
**characterized in**,
that said indicating means (212 or 323) outputs said warning signal only when the mobile terminal (200 or 300) is in a communicating mode.

4. Mobile terminal according to claim 1, 2 or 3,
**characterized in**,
that said warning signal is an acoustic signal.

5. Mobile terminal according to one of the claims 1 to 4,
**characterized in**,
that said warning signal is a visual signal.

6. Mobile terminal according to one of the claims 1 to 5,
**characterized in**,
that said warning signal is a vibration signal.

7. Mobile terminal according to one of the claims 1 to 6,
**characterized in**,
that said activating means (213 or 330) is a key.

8. Mobile terminal according to one of the claims 1 to 7,
**characterized in**,
that said extending means (214 or 331) extends said predetermined time period by said extension time period only once.

9. Method for controlling a mobile terminal (200) for a wireless cellular telecommunication system, comprising transmitting and receiving means (201) for transmitting information to and receiving information from base stations of said telecommunication system and for receiving mode change information transmit from a base station on the basis of said wireless telecommunication system for protecting a predetermined area from disturbing use of the mobile terminal, with the steps of detecting received mode change information and changing a mode of the mobile terminal (200) into a protection mode depending on the received mode change information, whereby after detection of a mode change information and before changing the mode of the mobile terminal a warning signal is output for warning a user that the mobile terminal will be put in said protection mode after a predetermined time period has elapsed, and
extending said predetermined time period by an extension time period in response to an activation of an activating means (213) by a user.

10. Method for controlling a mobile terminal (300) for a wireless cellular telecommunication system, comprising transmitting and receiving means (320) for transmitting information to and receiving information from base stations of said telecommunication system, and
detecting means (310) for detecting mode change information transmit from a base station of a wireless protection system for protecting a predetermined area from disturbing use of the mobile terminal, said wireless protection system being different from said wireless telecommunication system, with the steps of changing a mode of the mobile terminal (300) into a protection mode depending on detected mode change information,
whereby after detection of a mode change information and before changing the mode of the mobile terminal a warning signal is output for warning a user that the mobile terminal will be put in said protection mode after a predetermined time period has elapsed, and
extending said predetermined time period by an extension time period in response to an activation of an activating means (330) by a user.

11. Method for controlling a mobile terminal according to claim 9 or 10,
**characterized in**,
that said warning signal is output only when the mobile terminal is in a communicating mode.

12. Method for controlling a mobile terminal according to claim 9, 10 or 11,
**characterized in**,
that said warning signal is an acoustic signal.

13. Method for controlling a mobile terminal according to claim 9, 10 or 11,
**characterized in**,
that said warning signal is a visual signal.

14. Method for controlling a mobile terminal according to claim 9, 10 or 11,
**characterized in**,
that said warning signal is a vibration signal.
